Europäisches Patentamt

European Patent Office

Office européen des brevets

(19)

(11) Veröffentlichungsnummer: **0 152 721**
**B1**

(12) **EUROPÄISCHE PATENTSCHRIFT**

(45) Veröffentlichungstag der Patentschrift:
26.10.88

(51) Int. Cl.⁴: **A 21 D 13/08**

(21) Anmeldenummer: **84810464.2**

(22) Anmeldetag: **24.09.84**

(54) Genussmittel.

(30) Priorität: **29.11.83 CH 6379/83**

(43) Veröffentlichungstag der Anmeldung:
**28.08.85 Patentblatt 85/35**

(45) Bekanntmachung des Hinweises auf die Patenterteilung:
**26.10.88 Patentblatt 88/43**

(84) Benannte Vertragsstaaten:
**AT BE DE FR GB LU NL SE**

(56) Entgegenhaltungen:
**FR - A - 451 640**
**FR - A - 978 296**
**FR - A - 1 335 999**
**FR - A - 2 068 370**
**GB - A - 465 242**
**GB - A - 586 375**

(73) Patentinhaber: **Aujourd'hui, René F., Lambergstrasse 4, CH-8610 Uster (CH)**

(72) Erfinder: **Aujourd'hui, René F., Lambergstrasse 4, CH-8610 Uster (CH)**

(74) Vertreter: **White, William et al, PATENTANWALTS-BUREAU ISLER AG Postfach 6940 Walchestrasse 23, CH-8023 Zürich (CH)**

ACTORUM AG

## Beschreibung

Die vorliegende Erfindung betrifft ein Genussmittel gemäss dem Oberbegriff des unabhängigen Patentanspruchs 1.

Bei Waffelriegeln ist es bekannt, zwei oder mehr Waffelblätter unter Zwischenlage einer oder mehrerer Cremesorten aufeinanderzulegen, beispielsweise drei Waffelblätter mit einer Schicht Vanillecreme und mit einer Schicht Nusscreme. Dies ergibt einen farblichen Vorteil. Jedoch fehlt ein typischer Geschmack, d.h. der typische Geschmack tritt zu wenig deutlich hervor. Aus diesem Grund wird die Unterseite des Riegels mit einer Fettglasur überzogen.

Beim Verzehr wird meistens der in einem Umschlagmaterial verpackte Riegel aus der Verpakkung, die zuerst zu zerreissen ist, herausgezogen und zwischen Daumen und Zeige- oder Mittelfinger oben und unten gehalten. Weil die Unterseite aber aus einer Fettglasur besteht, wird der Daumen beschmutzt.

Es ist deshalb eine Aufgabe der Erfindung, diesem Umstand abzuhelfen und eine Lösung dafür zu schaffen, dass beim Verzehr nicht in eine Couverture hineingegriffen werden muss.

Erfindungsgemäss wird dies durch die Merkmale im kennzeichnenden Teil des unabhängigen Patentanspruchs 1 erreicht. Besonders vorteilhafte Ausbildungsformen dieser Merkmale sind in den abhängigen Patentansprüchen beschrieben.

Ausführungsbeispiele der Erfindung werden nachfolgend anhand der Zeichnung erläutert. Es zeigen:

Fig. 1 einen Waffelriegel in perspektivischer Ansicht mit einer kreisförmigen Scheibe eines Waffelblattes, und

Fig. 2 einen Waffelriegel in perspektivischer Ansicht mit einer länglichrunden Scheibe eines Waffelblattes.

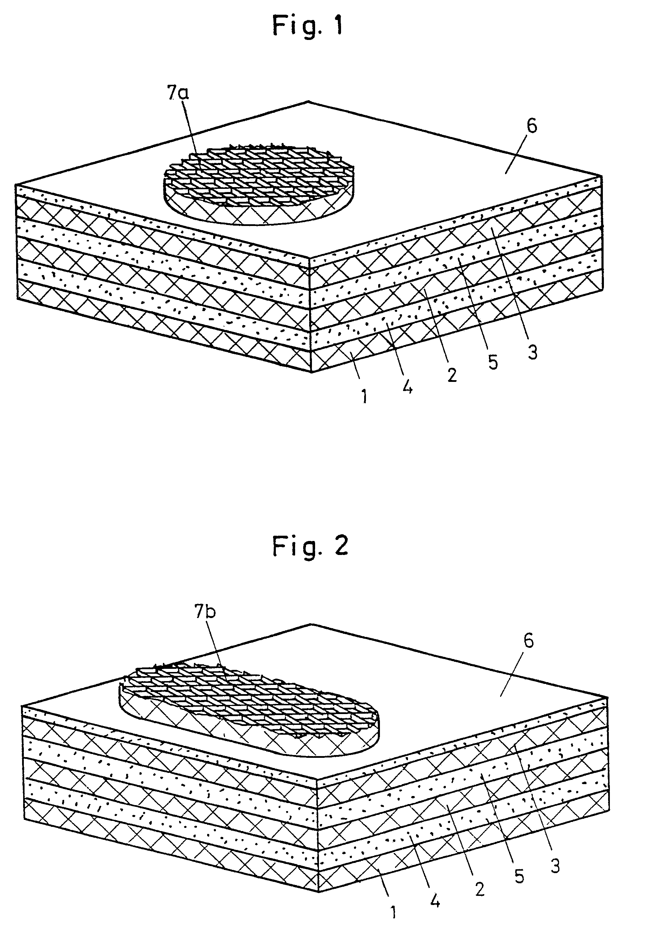

Die Waffelriegel gemäss Fig. 1 und 2 bestehen je aus drei Waffelblättern 1, 2 und 3 und zwei Crèmeschichten 4, 5 zwischen jeweils zwei Waffelblättern 1, 2, 3. Auf der Aussenseite des einen Waffelblattes 3, das in der Verpackung unten liegt, befindet sich eine Schicht 6 einer weiteren Crèmeschicht in Form einer Fettglasur als Geschmacksverstärker.

Erfindungsgemäss ist nun auf der Schicht 6 noch ein fingerkuppengrosses Stück 7 eines Waffelblattes aufgebracht. Dieses Stück 7 bedeckt nur einen Teil der Oberfläche der Schicht 6 und kann als kreisförmige Scheibe 7a gemäss Fig. 1 oder als länglichrunde Scheibe 7b gemäss Fig. 2 ausgebildet sein. Damit bleibt im Gegensatz zu einem die ganze Fläche bedeckenden Waffelblatt die Wirkung der weiteren Crèmeschicht als Geschmacksverstärker bestehen.

Zur Herstellung eines derartigen Riegels muss zuerst die durch Eintauchen in eine flüssige Fettglasur aufgebrachte Schicht 6 durch Kühlen erstarren. Daraufhin wird der Riegel gewendet, so dass die Schicht 6 oben liegt, bevor ein Tropfen flüssiger Fettglasur aufgebracht und ein Stück eines Waffelblattes 7a oder 7b auf diese aufgetropfte Glasur gelegt wird.

Dieses Stück eines Waffelblattes 7a, 7b hält damit sicher auf der Lasurschicht 6 und beim Verzehr kann der Riegel mittels zwei Fingern gehalten werden, ohne dass in die Lasur hineingegriffen werden muss.

Ein solches Stück eines zusätzlichen Waffelblattes bedeutet eine Bereicherung des Riegels, einerseits ist noch ein zusätzliches Waffelblatt angebracht und anderseits wird die Schichtdicke der Lasur vergrössert.

Anstelle des Lasurmaterials kann auch ein anderes Lebensmittel verwendet werden, das in etwa dieselbe Schmelztemperatur hat wie die Lasur und vom Verzehrer nicht als Fremdkörper beachtet wird.

Das Waffelblattstück kann selbstverständlich jede beliebige Form haben, und durch Formenstanzung können beliebte Sujets insbesondere Tierchen oder dgl. auf die die Kinder ansprechen, als Waffelblatt-Stück verwendet werden.

Obwohl hier nur ein Beispiel mit einseitiger Fettlasur angesprochen wurde, können natürlich Waffeln irgend einer Art und Form, mit zwei- oder mehrseitigem Überzug mit solchen Stücken die dann auf sich gegenüberliegenden Flächen angebracht werden, versehen sein.

## Patentansprüche

1. Genussmittel in Form einer Waffel mit mehreren Waffelblättern (1, 2, 3) und dazwischen liegender Crèmeschicht (4, 5) sowie mit einem aussen auf einem Waffelblatt (3) aufgebrachten, bei Körpertemperatur schmelzenden Überzug (6) und einem fingerkuppengrossen Stück Waffel (7a, 7b), das nur einen Teil der Oberfläche des Überzugs (6) bedeckt.

2. Genussmittel nach Patentanspruch 1, dadurch gekennzeichnet, dass das Stück Waffel (7a, 7b) aussermittig angeordnet ist.

## Claims

1. A dainty in the form of a wafer with several wafer sheets (1, 2, 3) and a creme layer (4, 5) lying between these and with a coating that melts at body temperature and is applied on the outside on a wafer sheet (3), and a finger-tip sized piece of wafer (7a, 7b), which only covers part of the surface of the coating (6).

2. A dainty according to claim 1, characterised in that the piece of wafer (7a, 7b) is set off-centre.

## Revendications

1. Friandise sous la forme d'une gaufre ayant plusieurs feuilles de gaufre (1, 2, 3) et une couche de crème (4, 5) entre elles, ainsi qu'un revêtement (6) déposé à l'extérieur sur l'une des feuilles de gaufre (3) et fondant à la température du corps humain et un morceau de gaufre (7a, 7b) de la dimension du bout des doigts et ne recouvrant qu'une partie de la surface du revêtement (6).

2. Friandise suivant la revendication 1, caractérisé en ce que le morceau de gaufre (7a, 7b) est disposé de manière excentrée.

# Fig. 1

# Fig. 2